# EUROPEAN PATENT APPLICATION

(11) **EP 1 387 281 A1**
(43) Date of publication of application: **04.02.2004**
(21) Application number: 02724724.6
(22) Date of filing: 08.05.2002
(51) Int. Cl.: G06F 13/00, H04N 7/173, H04H 1/02

(54) **RECEPTION APPARATUS**

(30) Priority: 08.05.2001 JP 2001136850
(71) Applicant: Sony Corporation, Tokyo 141-0001 (JP)
(72) Inventor: YAMADA, Noriyasu,c/o SONY CORPORATION, Tokyo 141-0001 (JP)
(74) Representative: Pilch, Adam John Michael
(86) International application number: PCT/JP2002/004478
(87) International publication number: WO 2002/091191

(57) **Abstract**

The present invention relates to a receiver suitable for the use of contents data recorded in an electronic device installed, for example, at home, through a mobile terminal at any location. A data transmitting server 8 authenticates access from a mobile terminal 1 via a network 6, requests a contents list for a fixed terminal 3 in the user's home via the network 6, and outputs the list, supplied from the fixed terminal 3 accordingly via the network 6, to a transmitter 9. In addition, the data transmitting server 8 requests via the network 6 the fixed terminal 3 in the user's home to transmit the contents data selected by the user of the mobile terminal 1, format-converts the contents data supplied by the fixed terminal 3 accordingly via the network 6, and outputs the contents to the transmitter 9. The present invention can be applied to, for example, mobile phones, personal handyphone system (PHS) phones, hand-held computers, car navigation systems, and headphone players.

## Description

### TECHNICAL FIELD

This invention relates to a receiver and, more particularly, to a receiver suitable for the use of contents data which is recorded in an electronic device installed, for example, at home, through a mobile terminal at a desired location.

### BACKGROUND ART

Suppose that voice data, image data, audio visual (AV) data, and any other digital data (hereinafter referred to as contents data) stored in a personal computer, a hard disk recorder, or another device installed at a specific location, such as at home, are to be used at an outside location. Conventionally, contents data to be used has been copied to a removable medium, such as a magnetic disk, optical disk, magneto-optical disk, and semiconductor memory, or to a hand-held computer or another portable device, and the copied data has been carried to the outside location. Another possible method is to transmit the contents data attached to an e-mail in advance to an e-mail address from which the contents data can be received at the outside location. In further another possible method, the contents data is uploaded to a predetermined server.

It is a cumbersome task to copy the contents data to be used at an outside location to a removable medium or a portable device, however. Another problem is that the desired contents data is not available at the outside location if undesired contents data is copied mistakenly to a removable medium or a portable device, or if it is forgotten to carry the removable medium.

The method in which e-mail including the contents data to be used is transmitted in advance is not suitable when a large amount of data such as voice data or AV data is to be used at the outside location. This is because there may be a limit on the amount of data that can be attached.

Uploading to a predetermined server in advance is more cumbersome processing than copying the contents data to a removable medium or a portable device.

### DISCLOSURE OF INVENTION

The present invention addresses the problems described above, and an object of the invention is to implement a system that enables the use of contents data stored, for example, at home at a desired location.

The receiver of the present invention includes connection means for connecting to a transmitting device through a network, first request means for requesting the transmitting device to transmit list data of contents data stored in a storing device, means for receiving the list data of the contents data, display processing means for displaying a list of the contents data according to the received list data, selection means for enabling a user to select desired contents from the displayed list of contents data, second request means for requesting the transmitting device to transmit the selected contents data, means for receiving the selected contents data, and reproduction means for reproducing the received contents data.

The receiver may be a mobile terminal.

The network can include at least one of public telephone lines and the Internet.

The contents data can be transmitted from the transmitting device to the receiver by using bands of broadcast signals.

A reception method of the present invention includes a connection step of connecting to a transmitting device through a network, a first request step of requesting the transmitting device to transmit list data of the contents data stored in a storing device, a step of receiving the list data of the contents data, a display processing step of displaying a list of the contents data according to the received list data, a selection step of enabling a user to select desired contents from the displayed list of contents data, a second request step of requesting the transmitting device to transmit the selected contents data, a step of receiving the selected contents data, and a reproduction step of reproducing the received contents data.

A program of the present invention on a recording medium includes a connection step of connecting to a transmitting device through a network, a first request step of requesting the transmitting device to transmit list data of contents data stored in a storing device, a step of receiving the list data of the contents data, a display processing step of displaying a list of the contents data according to the received list data, a selection step of enabling a user to select desired contents from the displayed list of contents data, a second request step of requesting the transmitting device to transmit the selected contents data, a step of receiving the selected contents data, and a reproduction step of reproducing the received contents data.

A program of the present invention includes a connection step of connecting to a transmitting device through a network, a first request step of requesting the transmitting device to transmit list data of contents data stored in a storing device, a step of receiving the list data of the contents data, a display processing step of displaying a list of the contents data according to the received list data, a selection step of enabling a user to select desired contents from the displayed list of contents data, a second request step of requesting the transmitting device to transmit the selected contents data, a step of receiving the selected contents data, and a reproduction step of reproducing the received contents data.

The transmitting device of the present invention includes accepting means for accepting access from the receiver through a network, identifying means for identifying the storing device corresponding to the receiver, connection means for connecting to the storing device through the network, means for obtaining a list of stored contents data in response to a request from the receiver, means for transmitting the list of the obtained contents data to the receiver, means for obtaining the contents data selected by a user of the receiver from the storing device, conversion means for format-converting the contents data obtained by the obtaining means to make the data adapt to the receiver, and means for transmitting the format-converted contents data to the receiver.

A transmitting method of the present invention includes an accepting step of accepting access from the receiver through a network, a identifying step of identifying a storing device corresponding to the receiver, a connection step of connecting to the storing device through the network, a step of obtaining a list of stored contents data from the storing device in response to a request from the receiver, a step of transmitting the list of the obtained contents data to the receiver, a step of obtaining the contents data selected by a user of the receiver from the storing device in response to a request from the receiver, a conversion step of format-converting the obtained contents data to make the data adapt to the receiver, and a step of transmitting the format-converted contents data to the receiver.

The network can include at least one of public telephone lines and the Internet.

The contents data can be transmitted to the receiver by using bands of broadcast signals.

The transmitting method of the present invention can further include a calculation step of calculating an amount of money to be charged for the user of the receiver.

A storing device of the present invention includes permission means for permitting a connection from a transmitting device through a network, list creation means for creating a list of stored contents data, reading means for reading the stored contents data in response to a request from the transmitting device, and supply means for supplying the list created by the list creation means and the contents data read by the reading means to the transmitting device through the network, the contents data being transmitted to an external terminal through the transmitting device.

A storing method of the present invention includes a permission step of permitting a connection from a transmitting device through a network, a list creation step of creating a list of stored contents data, a step of supplying the created list to the transmitting device in response to a request from the transmitting device, a reading step of reading stored contents data in response to a request from the transmitting device, and a supply step of supplying the contents data read by the processing in the reading step to the transmitting device through the network, the contents data being transmitted to an external terminal through the transmitting device.

A program of the present invention on a recording medium includes a permission step of permitting a connection from the transmitting device through a network, a list creation step of creating a list of stored contents data, a step of supplying the created list to the transmitting device in response to a request from the transmitting device, a reading step of reading stored contents data in response to a request from the transmitting device, and a supply step of supplying the contents data read by the processing in the reading step to the transmitting device through the network, the contents data being transmitted to an external terminal through the transmitting device.

In the receiver, methods, and program of the present invention, the receiver is connected to a transmitting device through a network, transmission of list data of contents data stored in the storing device is requested to the transmitting device, the list data of the contents data is received, and display of the list of the contents data is controlled according to the received list data. Furthermore, a user selects desired contents from the list of the contents data, transmission of the selected contents data is requested to the transmitting device, and the selected contents data is received and reproduced.

In the transmitting device and methods of the present invention, access from the receiver is accepted through a network, the storing device corresponding to the receiver is identified and the receiver is connected to the storing device through the network. A list of stored contents data is obtained from the storing device in response to a request from the receiver, the list of the obtained contents data is transmitted to the receiver, and the contents data selected by the user of the receiver is obtained from the storing device in response to a request from the receiver. Furthermore, the obtained contents data is format-converted so that the data adapts to the receiver. Then, the format-converted contents data is transmitted to the receiver.

In the storing device, methods, and program of the present invention, a connection from the transmitting device through a network is permitted, enabling a list of stored contents data to be created. The created list is supplied to the transmitting device in response to a request from the transmitting device. Further, in response to a request from the transmitting device, stored contents data is read out and transmitted to the transmitting device through the network.

### BRIEF DESCRIPTION OF DRAWINGS

FIG. 1 is a block diagram illustrating an exemplary configuration of a contents data transmitting system to which the present invention is applied.
FIG. 2 outlines how the contents data transmitting system transmits contents data.
FIG. 3 is a block diagram illustrating an exemplary configuration of a mobile terminal 1.
FIG. 4 is a block diagram illustrating an exemplary configuration of a fixed terminal 3.
FIG. 5 is a block diagram of an exemplary configuration of a data transmitting server 8.
FIG. 6 is a flowchart describing the operation of the contents data transmitting system.
FIG. 7 is a block diagram showing another exemplary configuration of the contents data transmitting system to which the present invention is applied.
FIG. 8 is a block diagram indicating an exemplary configuration of a general-purpose personal computer.

### BEST MODE FOR CARRYING OUT THE INVENTION

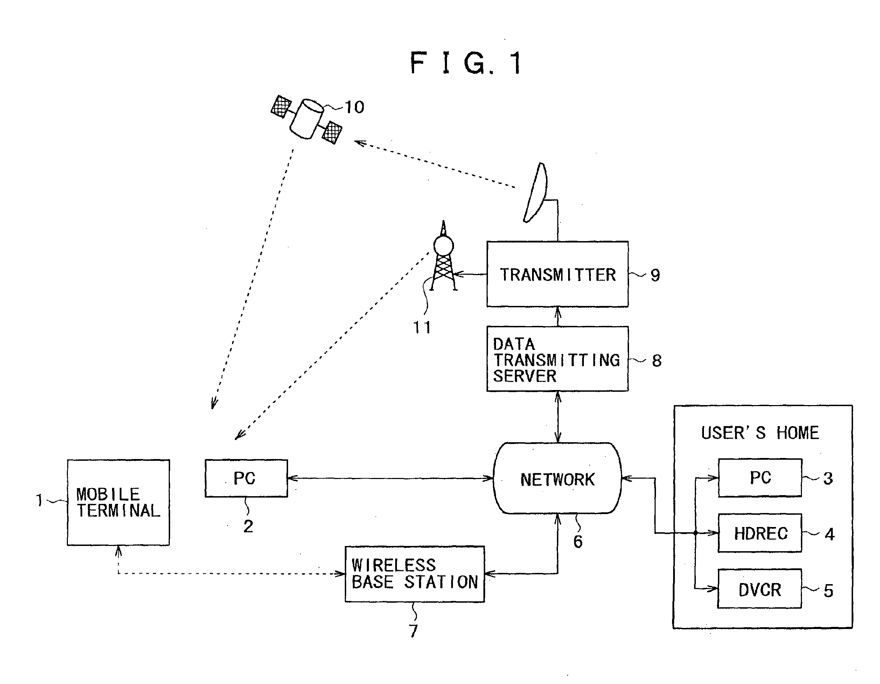

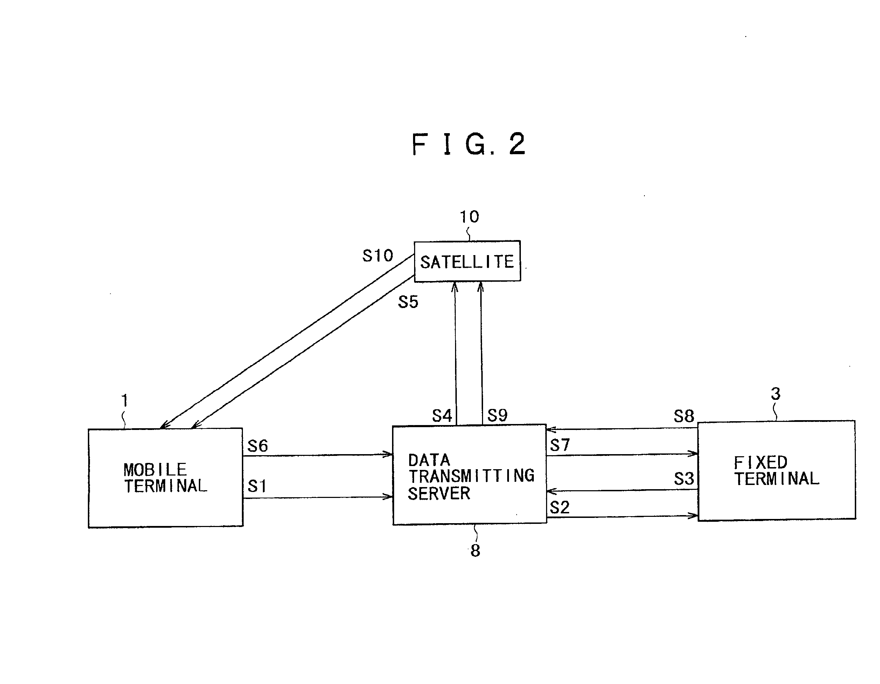

A contents data transmitting system to which the present invention is applied will be described with reference to FIGS. 1 and 2. FIG. 1 illustrates an exemplary configuration of the contents data transmitting system. The contents data transmitting system uses services provided by a data transmitting server 8 to enable a user to use desired contents data, which is stored in a personal computer (PC) 3, hard disk recorder (HDREC) 4, digital video cassette recorder (DVCR) 5, or other storage device installed in the user's home, with a mobile terminal 1 which the user carried to an outside location or on a personal computer (PC) 2 available at the outside location and connectable to a network 6.

The mobile terminal 1 which the user carries to an outside location accesses the data transmitting server 8 via a wireless base station and the network 6 typified by the Internet for requesting transmission of contents data from the user's home. The mobile terminal 1 receives the transmitted contents data transmitted from a satellite 10 or broadcast tower 11, and then reproduces the contents data (when the contents data is encoded voice data, for example, the mobile terminal 1 outputs decoded voice).

The mobile terminal 1 can also be implemented by adding the above functions to a mobile phone, personal handyphone system (PHS) phone, hand-held computer, car navigation system, headphone player or other existing electronic device.

As with the mobile terminal 1, the personal computer 2 available to the user at an outside location accesses the data transmitting server 8 via the network 6 for requesting transmission of contents data from the user's home. The personal computer 2 receives the transmitted contents data transmitted from the satellite 10 or broadcast tower 11, and then reproduces the contents data. The following description covers only the mobile terminal 1, and does not refer to the personal computer 2. However, the description concerning the mobile terminal 1 can also applies to the personal computer 2.

The personal computer 3 installed in the user's home receives television programs by a built-in TV tuner card and other functions, encodes the video signals and voice signals in MPEG2 (Moving Picture Experts Group Phase 2) or another format, and records the encoded signals on a built-in hard disk. In addition to encoded AV data such as television programs, voice data, image data, and given digital data are also recorded on the hard disk built into the personal computer 3.

The hard disk recorder 4 and digital video cassette recorder 5 each encode, in MPEG2 or another format, the images and voice of received television programs as well as video signals and voice signals externally entered and records the encoded signals on the built-in hard disk.

Necessarily, the personal computer 3 to digital video cassette recorder 5 have functions which read AV data recorded in encoded form and other data, decode the data, and output corresponding voice signals and video signals.

The personal computer 3 to digital video cassette recorder 5 remain connected to the network 6. The personal computer to digital video cassette recorder create a list of the recorded contents data (hereinafter referred to as a contents list) in response to a request from the data transmitting server 8 via the network 6, and supply the list to the data transmitting server 8 through the network 6. Furthermore, the personal computer 3 to digital video cassette recorder 5 read the contents data specified by the user at an outside location in response to a request from the data transmitting server 8 via the network 6, and transmit the data to the data transmitting server 8 through the network 6.

Hereinafter, the personal computer 3 to digital video cassette recorder 5 installed in the user's home are each simply called the fixed terminal 3. Electronic devices that can be used as the fixed terminal 3 are not limited to the personal computer 3 to digital video cassette recorder 5 described above.

Within the network 6 interconnecting the fixed terminal 3 and data transmitting server 8, a broad band line, such as an integrated service digital network (ISDN), asymmetric digital subscriber line (ADSL), high bit rate digital subscriber line (HDSL), community antenna television system (CATV), or wireless local loop (WLL), or a narrow band line is used between the fixed terminal 3 and the designated access point to which the fixed terminal 3 is connected.

A wireless base station 7 relays communication from the mobile terminal 1 connected wirelessly to the data transmitting server 8 via the network 6.

The data transmitting server 8 authenticates access from the mobile terminal 1 via the network 6, requests a contents list for the fixed terminal 3 installed in the user's home through the network 6, and outputs the contents list supplied accordingly from the fixed terminal 3 through the network 6 to a transmitter 9. The data transmitting server 8 requests through the network 6 the fixed terminal 3 installed in the user's home to transmit the contents data selected by the user of the mobile terminal 1, converts the format of the contents data supplied from the fixed terminal 3 through the network 6, and outputs the contents data to the transmitter 9.

The transmitter 9 transmits the contents list entered from the data transmitting server 8 and the contents data converted to a designated format only to the mobile terminal 1 through a satellite broadcast network in which a satellite 10 is used or through a terrestrial broadcasting network in which a broadcast tower 11 is used.

Next, data transmission by the contents data transmitting system will be outlined with reference to FIG. 2. The user needs to notify in advance a manager responsible for the management of the data transmitting server 8 of at least user's name, address, account information for paying system fees, identification information for identifying the mobile terminal 1 to be used (such as a device ID), and identification information for identifying the fixed terminal 3 on the network 6 (such as an Internet protocol (IP) address). It is assumed that member registration information is held by the data transmitting server 8.

When the mobile terminal 1 accesses the data transmitting server 8 in step S1, the data transmitting server 8 identifies the user of the mobile terminal 1 according to the device ID transmitted at the time of access by the mobile terminal 1.

In step S2, the data transmitting server 8 connects to the fixed terminal 3 of the user identified in step S1 and requests a contents list. In response to this request, the fixed terminal 3 creates a contents list in step S3 and transmits it to the data transmitting server 8.

In step S4, the data transmitting server 8 outputs the contents list supplied from the fixed terminal 3 to the transmitter 9. In step S5, the transmitter 9 transmits the contents list to the mobile terminal 1 through the satellite 10.

In step S6, the mobile terminal 1 shows the received contents list to the user for prompting the user to make a selection. When the user selects contents data in response to this prompt, the mobile terminal 1 transmits information that identifies the user-selected contents data to the data transmitting server 8.

In step S7, the data transmitting server 8 requests the fixed terminal 3 to transmit the user-selected contents data. In response to this request, in step S8, the fixed terminal 3 reads the selected contents data and transmits it to the data transmitting server 8.

In step S9, the data transmitting server 8 converts the contents data supplied from the fixed terminal 3 to a format in which the mobile terminal 1 can process the contents data with ease. Then, the data transmitting server 8 outputs the format-converted data contents to the transmitter 9. In step S10, the transmitter 9 transmits the format-converted data through the satellite 10.

Since the transmitted contents data is encrypted with the device ID of the mobile terminal 1 or the like, only the mobile terminal 1 can use the contents data.

Upon the completion of the transmission of the contents data, the data transmitting server 8 creates information on a bill to be charged to the user of the mobile terminal 1, and stores the information.

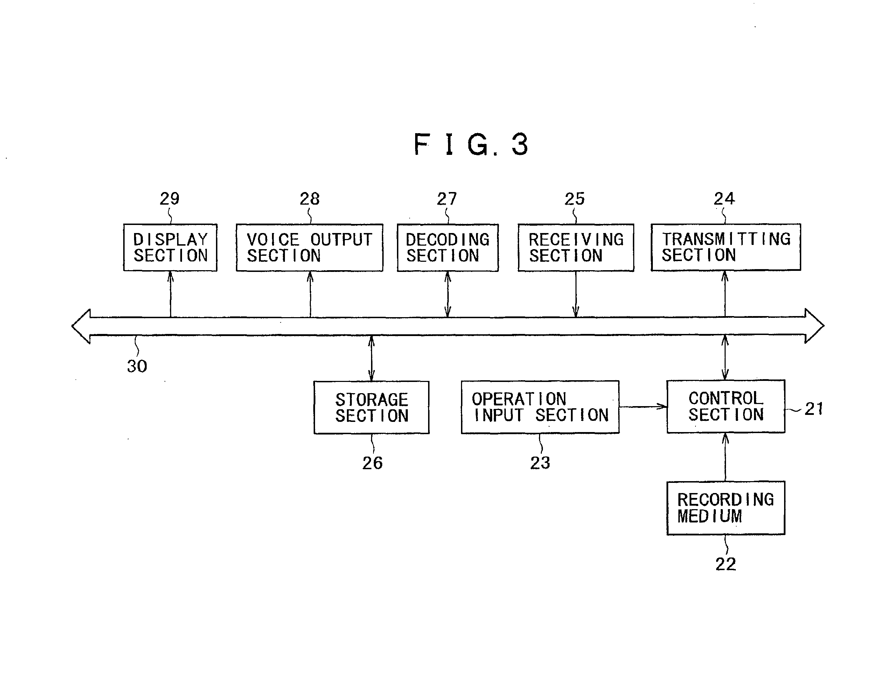

FIG. 3 is an exemplary configuration of the mobile terminal 1. In FIG. 3, constituent components, which are used to execute inherent functions of an electronic device usable as the mobile terminal 1, are omitted for convenience; example inherent functions are communication functions of a mobile phone; examples of such electronic devices are mobile phones, PHS phones, hand-held computers, car navigation systems, and headphone players.

A control section 21 in the mobile terminal 1 controls the entire mobile terminal 1, according to a control program that is read from a recording medium 22 or user's operation information entered from an operation input section 23. In addition to the control program executed by the control section 21, the device ID is also recorded on the recording medium 22. The operation input section 23, comprising buttons and other components, is disposed outside the mobile terminal 1; the operation input section 23 accepts operation by the user, and outputs the associated information to the control section 21.

A transmitting section 24 is connected to the data transmitting server 8 through the wireless base station 7 and network 6 so as to transmit various requests. A receiving section 25 receives a list of contents data and contents data, intended only for the mobile terminal 1, which were transmitted from the satellite 10 or broadcast tower 11, and supplies them to a storage section 26 through a control bus 30. The contents list and contents data to be transmitted are encrypted using the device ID of the mobile terminal 1 or the like so that only the mobile terminal 1 can receive them accurately. Therefore, after receiving the encrypted contents list and contents data, the receiving section 25 decrypts them using the device ID recorded on the recording medium 22.

The storage section 26 stores the contents list and contents data decrypted by the receiving section 25. A decoding section 27 decodes the contents data stored in the storage section 26, supplies obtained video signals to a display section 29 through the control bus 30, and supplies voice signals to a voice output section 28.

The voice output section 28 outputs voice corresponding to the voice signals supplied from the decoding section 27. The display section 29 reads and displays the contents list stored in the storage section 26, according to control by the control section 21. The display section 29 displays an image of the contents data supplied from the decoding section 27.

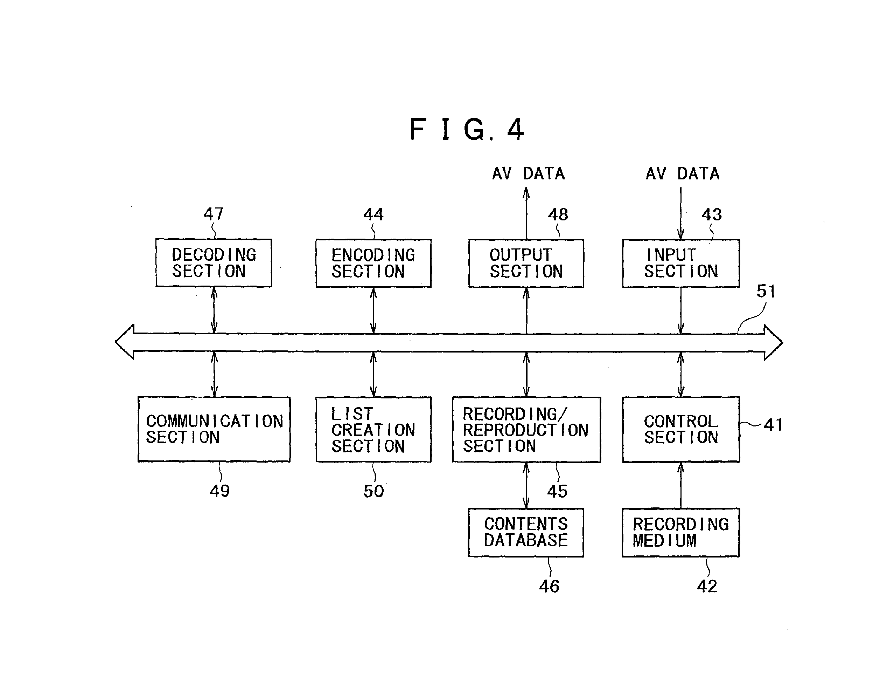

FIG. 4 is an exemplary configuration of the fixed terminal 3. In FIG. 4, constituent components, which are used to execute inherent functions of an electronic device usable as the fixed terminal 3, are omitted for convenience; examples of such electronic devices are the above-described personal computers, hard disk recorders, and digital video cassette recorders; an example constituent component is a TV tuner that receives television broadcast.

A control section 41 in the fixed terminal 3 controls the entire fixed terminal 1, according to a control program that is read from a recording medium 42. The control program executed by the control section 41 is recorded on the recording medium 42. An input section 43 accepts AV data entered from a TV tuner (not shown) or another device, and supplies it to an encoding section 44 via a control bus 51. The encoding section 44 encodes the AV data from the input section 43 in designated mode (for example, MPEG2 mode), and outputs the resulting encoded AV data (hereinafter referred to as coded data) to a recording/reproduction section 45 through the control bus 51.

The recording/reproduction section 45 records the coded data from the encoding section 44 in a contents database 46. The recording/reproduction section 45 reads the coded data specified by the control section 41 from the contents database 46, and supplies it to a decoding section 47 or communication section 49 via the control bus 51. The contents database 46, including a recording medium, stores coded data.

The decoding section 47 decodes coded data supplied from the recording/reproduction section 45, restores the AV data, and supplies the data to an output section 48 via the control bus 51. The output section 48 outputs the AV data from the decoding section 47 to a monitor (not shown) or another device.

The communication section 49 receives a request for a contents list and contents data transmitted from the data transmitting server 8 via the network 6, according to a request from the mobile terminal 1, and outputs them to the control section 41 via the control bus 51. The communication section 49 also transmits the contents list created by a list creation section 50 to the data transmitting server 8 via the network 6. Furthermore, the communication section 49 transmits coded data supplied from the recording/reproduction section 45 to the data transmitting server 8 via the network 6.

The list creation section 50 creates a contents list, which is a list of the coded data recorded in the contents database 46, according to control by the control section 41, and outputs it to the communication section 49 via the control bus 51.

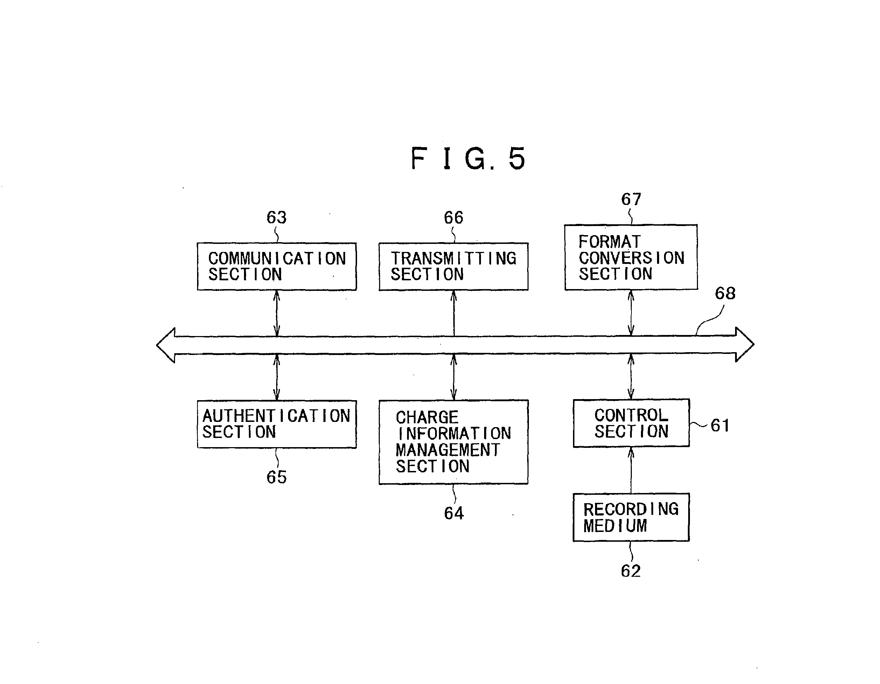

FIG. 5 is an exemplary configuration of the data transmitting server 8. A control section 61 in the data transmitting server 8 controls the entire data transmitting server 8 according to a control program read from a recording medium 62. The control program executed by the control section 61 is recorded on the recording medium 62.

A communication section 63 receives a request for access from the mobile terminal 1 via the network 6, and supplies an output to an authentication section 65 via a control bus 68. The communication section 63 also receives a request for contents data from the mobile terminal 1 via the network 6, and supplies an output to the control section 61 via the control bus 68. Furthermore, according to control by the control section 61, the communication section 63 connects to the fixed terminal 3 via the network 6, requests transmission of a contents list and contents data, receives the contents list and contents data transmitted from the fixed terminal 3 accordingly, supplies the contents list to a transmitting section 66, and supplies the contents data (coded data) to a format conversion section 67.

A charge information management section 64 holds member registration information registered in advance for the contents data transmitting system, while the section 64 calculates a fee generated for the user of the mobile terminal 1 due to transmission of the contents data and stores the fee as charge information. It is also possible to connect to a fill-in term server (not shown) for payment based on the charge information.

In response to a request entered from the communication section 63 and transmitted from mobile terminal 1, the authentication section 65 identifies the user (person to be charged) of the mobile terminal 1 and the fixed terminal 3 to be connected by using the device ID of the mobile terminal 1 and other information included in the access request.

With respect to authentication by the authentication section 65, it is also possible to use fingerprint authentication or personal identification number (PIN) code input for determining whether the person who is operating the mobile terminal 1 is an authorized user.

The transmitting section 66 encrypts the contents list supplied from the communication section 63 using the device ID of the mobile terminal 1 and other information so that only the mobile terminal 1 can receive the contents list accurately, and then transmits the encrypted contents data to the transmitter 9. The transmitting section 66 also encrypts the format-converted contents data (coded data) supplied from the format conversion section 67 using the device ID of the mobile terminal 1 and other information so that only the mobile terminal 1 can receive the contents data accurately, and transmits it to the transmitter 9.

The format conversion section 67 converts the contents data (coded data) supplied from the communication section 63 to a format in which the mobile terminal 1 can process the contents data with ease. Then, the format conversion section 67 outputs the format-converted contents data to the transmitting section 6. Specifically, when the contents data is coded in MPEG2 mode, the format conversion section 67 may convert it to MPEG4 format, allowing easier transmission. When the contents data is audio data, the format conversion section 67 may convert it to a format, such as MPEG-1 Layer 3 (MP3) or Adaptive Transform Acoustic Coding 3 (ATRAC3), in which the mobile terminal 1 can decode the data, or to a format capable of reproducing in streaming mode.

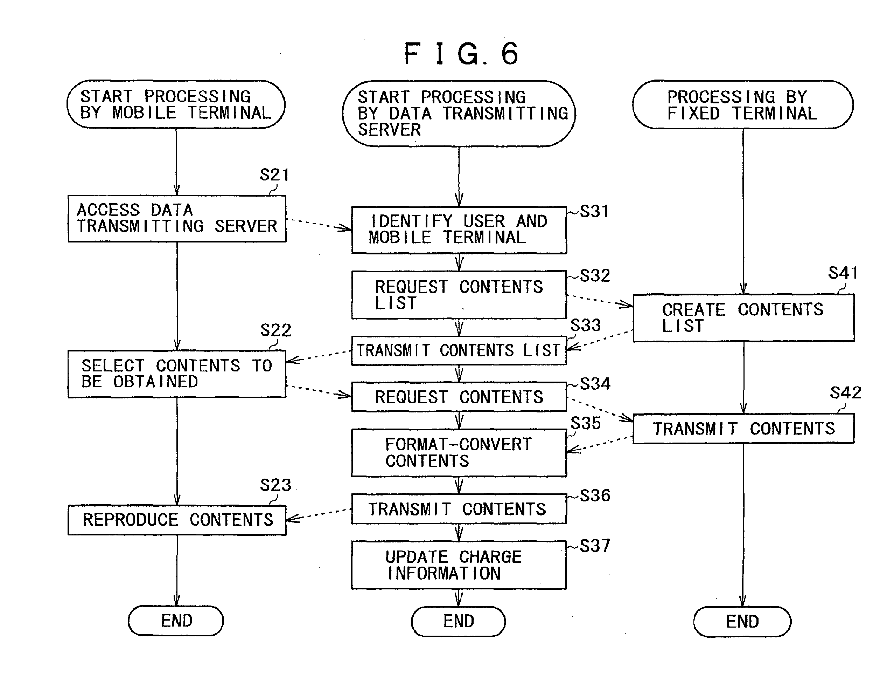

Next, the operation of the contents data transmitting system will be described with reference to the flowchart in FIG. 6.

In step S21, according to control by the control section 21, the transmitting section 24 of the mobile terminal 1 connects to the data transmitting server 8 via the wireless base station 7 and network 6, and transmits an access request including the device ID stored in the storage section 26.

In step S31, the communication section 63 of the data transmitting server 8 responds to the access from the mobile terminal 1 by outputting the device ID, included in the received access request, to the authentication section 65. The authentication section 65 searches for the member registration information of the user who uses the system, which is held in the charge information management section 64, and identifies the user corresponding to the device ID transmitted from the mobile terminal 1, the IP address of the fixed terminal 3 in the user's home, and other information. In step S32, according to control by the control section 61, the communication section 63 connects to the fixed terminal 3 via the network 6, and requests transmission of a contents list. This request includes the device ID of the mobile terminal 1, and other information on the requester.

In step S41, the communication section 49 of the fixed terminal 3 determines whether the connection by the data transmitting server 8 is possible according to the device ID of the mobile terminal 1 and other information on the requester. When permitting the connection, the communication section 49 outputs a request for transmission of the received contents list to the control section 41. The list creation section 50 creates a list of contents data stored in the contents database 46 (called a contents list) according to control by the control section 41, and outputs the list to the communication section 49. The communication section 49 transmits the contents list, transmitted from the list creation section 50, to the data transmitting server 8 via the network 6.

In step S33, the communication section 63 of the data transmitting server 8 receives the contents list from the fixed terminal 3, and supplies it to the transmitting section 66. The transmitting section 66 obtains the device ID of the mobile terminal 1 which is a destination of transmitting the contents list, from the authentication section 65. Then, the transmitting section 66 encrypts the contents list using the device ID and transmits the encrypted list to the transmitter 9. After that, the transmitter 9 enables only the mobile terminal 1 to accurately receive the contents list of the fixed terminal 3. The contents list is transmitted as radio signals which use the satellite 10 or broadcast tower 11.

In step S22, the receiving section 25 of the mobile terminal 1 receives the encrypted contents list, decrypts it by using its device ID, and outputs the contents list to the display section 29. The display section 29 displays the contents list and a notification that prompts the user for selection, according to the control by the control section 21. When the user sees the notification and selects the contents data that the user wants to use by using the operation input section 23, the operated information is output to the control section 21. The transmitting section 24 transmits information that identifies the user-selected contents data to the data transmitting server 8 via the wireless base station 7 and network 6.

In step S34, the communication section 63 of the data transmitting server 8 then connects to the fixed terminal 3 via the network 6 according to the control by the control section 61, and requests transmission of the contents data corresponding to the contents data requesting information from the mobile terminal 1.

In step S42, the communication section 49 of the fixed terminal 3 outputs the received contents data transmission request to the control section 41. According to the control by the control section 41, the recording/reproduction section 45 reads the requested contents data from the contents database 46, and outputs the data to the communication section 49. The communication section 49 uploads the contents data transmitted from the recording/reproduction section to the data transmitting server 8 through the network 6. This completes a series of processing by the fixed terminal 1.

In step S35, the communication section 63 of the data transmitting server 8 receives the contents data transmitted from the fixed terminal 3, and output the data to the format conversion section 67. The format conversion section 67 converts the contents data to a format in which the mobile terminal 1 can process with ease. Then, the format conversion section 67 outputs the format-converted contents data to the transmitting section 6. In step S36, the transmitting section 66 encrypts the contents data which was format-converted by using the device ID, indicating the transmission destination of the contents data, of the mobile terminal 1. Then, the format conversion section 67 outputs the encrypted contents data to the transmitter 9. After that, the transmitter 9 enables only the mobile terminal 1 to accurately receive the contents list uploaded from the fixed terminal 3. The contents data is transmitted as radio signals which use the satellite 10 or broadcast tower 11.

In step S23, the receiving section 25 of the mobile terminal 1 receives the encrypted contents data, decrypts it by using its device ID, and supplies the contents data to the decoding section 27. After that, the contents data is reproduced by the decoding section 27, voice output section 28, and display section 29. Specifically, the decoding section 27 decodes the contents data, the display section 29 displays resulting video signals, and the voice output section 28 outputs voice signals. This completes a series of processing by the mobile terminal 1.

In step S37, the charge information management section 64 of the data transmitting server 8 calculates a fee to be charged to the user of the mobile terminal 1 as a value for transmission of the contents data, and stores the fee as charge information. According to the charge information and the account information in the member registration information, the account is settled for each user on a regular basis. This completes a series of processing by the data transmitting server 8, completing the description of the operation of the contents data transmitting system.

As described above, the contents data transmitting system of this invention enables a user to use contents data stored in the fixed terminal 3 in user's home at any location.

Another possible usage of the contents data transmitting system is to use the mobile terminal 1 at an outside location for connecting to the data transmitting server 8 and transmitting a command, for example, that reserves the recording of television programs to the fixed terminal 3 through the data transmitting server 8.

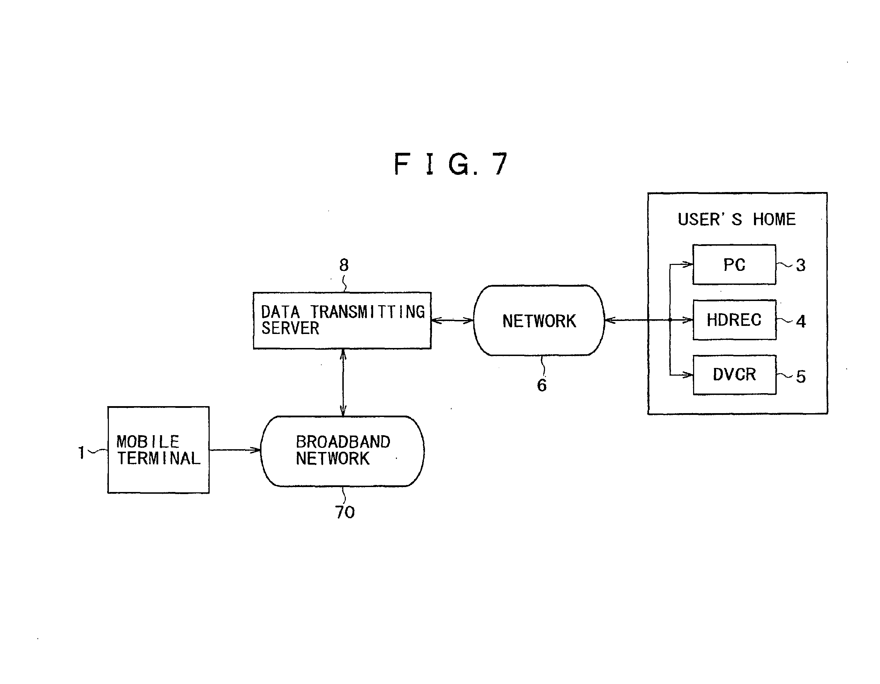

In an embodiment of the present invention, a contents list and contents data are superimposed on broadcast signals and transmitted to the mobile terminal 1 via the satellite 10. When the data transmitting server 8 and the mobile terminal 1 are interconnected by a broadband network 70 or the like as shown in FIG. 7, however, a contents list and contents data can be transmitted to the mobile terminal 1 directly from the data transmitting server 8 through the broadband network 70, without the contents list and contents data being superimposed on broadband signals.

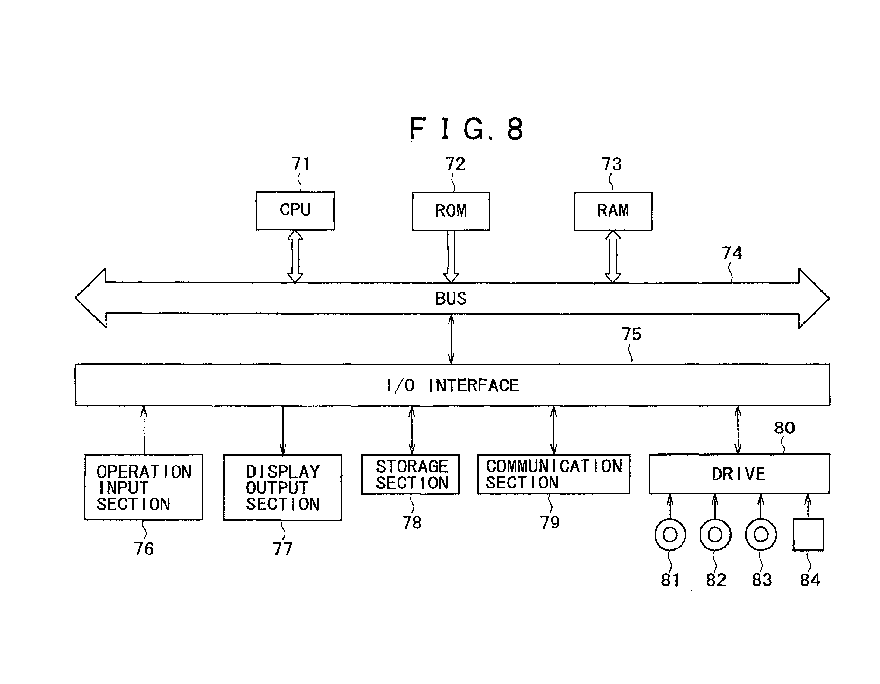

The mobile terminal 1, fixed terminal 3, and data transmitting server 8, which are constituent components of the contents data transmitting system, can not only be implemented by hardware, but also be implemented by having the personal computer execute appropriate software. When a series of processing is to be executed by software, the processing is executed by a computer in which programs constituting the software is embedded in a dedicated hardware, or by installing the software from a recording medium, for example, into a general-purpose personal computer, configured as shown in FIG. 8, capable of executing various processing with various installed programs.

The personal computer incorporates a central processing unit (CPU) 71. An I/O interface 75 is connected to the CPU 71 via a bus 74. The following are connected to the I/O interface 75: an operation input section 76 comprising a keyboard, a mouse, a remote controller, and other input devices from which the user enters operation commands; a display output section 77 comprising a cathode ray tube (CRT) or liquid crystal display (LCD) and other devices which displays synthesized video signals; a storage section 78 comprising a hard disk drive and other devices which stores programs and various data; a communication section 79 which communicates various data via the network 6; and a drive 80 which reads or writes data from or to a recording medium such as a magnetic disk 81 to semiconductor memory 84. A read-only memory (ROM) 72 and random access memory (RAM) 73 are connected to the bus 74.

Programs such as those which operate the data transmitting server 8 are supplied to the personal computer. The programs are stored in the magnetic disk 81 (including a floppy disk), an optical disk 82 (including compact disk read-only memory (CD-ROM) and digital versatile disc (DVD)), a magneto-optic disk 83 (including mini disk (MD)), or the semiconductor memory 84. These programs are read by the drive 80, and installed in the hard disk drive built into the storage section 78. The programs installed in the storage section 78 are loaded from the storage section 78 into the RAM 73 and executed by instructions from the CPU 71 in response to commands entered into the operation input section 76.

In this description, programs recorded on the recording medium include processing executed in time series in the order in which they are recoded, and also include processing not necessarily executed in time series but executed in parallel or individually.

Also in this description, the system is an entire device comprising a plurality of devices.

### INDUSTRIAL APPLICABILITY

As described above, the present invention enables contents data to be used at a desired location. The invention also enables the selected contents data to be supplied to the receiver positioned at any location. Furthermore, the invention enables contents data to be supplied to the receiver positioned at any location via a transmitter.

## Claims

1. A receiver for receiving contents data transmitted by a transmitting device among said contents data stored in a storing device, said receiver comprising:
connection means for connecting to said transmitting device via a network;
first request means for requesting said transmitting device to transmit list data of said contents data stored in said storing device;
means for receiving said list data of said contents data;
display processing means for displaying a list of said contents data according to said received list data;
selection means for selecting contents data, requested by a user, from said displayed list of contents data;
second request means for requesting said transmitting device to transmit said selected contents data;
means for receiving said selected contents data; and
reproduction mans for reproducing said received contents data.

2. The receiver according to claim 1, wherein said receiver is a mobile terminal.

3. The receiver according to claim 1, wherein said network includes at least one of a public telephone line and the Internet.

4. The receiver according to claim 1, wherein said contents data is transmitted from said transmitting device to said receiver by using a band of broadcast signals.

5. A receiving method of a receiver which receives contents data transmitted by a transmitting device among said contents data stored in a storing device, said receiving method comprising:
a connection step of connecting to said transmitting device via a network;
a first request step of requesting said transmitting device to transmit list data of said contents data stored in said storing device;
a step of receiving said list data of said contents data;
a display processing step of displaying a list of said contents data according to said received list data;
a selection step of selecting contents data, requested by a user, from said displayed list of contents data;
a second request step of requesting said transmitting device to transmit said selected contents data;
a step of receiving said selected contents data; and
a reproduction step of reproducing said received contents data.

6. A recording medium including a program for reception, said program receiving contents data transmitted by a transmitting device among said contents data stored in a storing device, and said program being readable by a computer, comprising:
a connection step of connecting to said transmitting device via a network;
a first request step of requesting said transmitting device to transmit list data of said contents data stored in said storing device;
a step of receiving said list data of said contents data;
a display processing step of displaying a list of said contents data according to said received list data;
a selection step of selecting contents data, requested by a user, from said displayed list of contents data;
a second request step of requesting said transmitting device to transmit said selected contents data;
a step of receiving said selected contents data; and
a reproduction step of reproducing said received contents data.

7. A program for having a computer, which receives contents data transmitted by a transmitting device among said contents data stored in a storing device, execute:
a connection step of connecting to said transmitting device via a network;
a first request step of requesting said transmitting device to transmit list data of said contents data stored in said storing device;
a step of receiving said list data of said contents data;
a display processing step of displaying a list of said contents data according to said received list data;
a selection step of selecting contents data, requested by a user, from said displayed list of contents data;
a second request step of requesting said transmitting device to transmit said selected contents data;
a step of receiving said selected contents data; and
a reproduction step of reproducing said received contents data.

8. A transmitting device for obtaining contents data stored in a storing device and transmitting said contents data to a receiver, said transmitting device comprising:
accepting means for accepting an access from said receiver via a network;
identifying means for identifying said storing device corresponding to said receiver;
connection means for connecting to said storing device via said network;
obtaining means for obtaining a list of said stored contents data from said storing device, in response to a request from said receiver;
means for transmitting said obtained list of contents data to said receiver;
obtaining means for obtaining contents data selected by a user of said receiver from said storing device, in response to a request from said receiver;
conversion means for format-converting said contents data obtained by said obtaining means to make said contents data compatible with said receiver; and
means for transmitting said format-converted contents data to said receiver.

9. A transmitting method of a transmitting device which obtains contents data stored in a storing device and transmits said contents data to a receiver, said transmitting method comprising;
an accepting step of accepting an access from said receiver via a network;
a identifying step of identifying said storing device corresponding to said receiver;
a connection step of connecting to said storing device via said network;
an obtaining step of obtaining a list of said stored contents data from said storing device, in response to a request from said receiver;
a step of transmitting said obtained list of contents data to said receiver;
an obtaining step of obtaining contents data selected by a user of said receiver from said storing device, in response to a request from said receiver;
a conversion step of format-converting said contents data obtained by said obtaining step to make said contents data compatible with said receiver; and
a step of transmitting said format-converted contents data to said receiver.

10. The transmitting method according to claim 9, wherein said network includes at least one of a public telephone line and the Internet.

11. The transmitting method according to claim 9, wherein said contents data is transmitted to said receiver by using a band of broadcast signals.

12. The transmitting method according to claim 9, further comprising a calculation step of calculating an amount of money to be charged for a user of said receiver for a transmission of at least one of said list and contents data.

13. A storing device for storing contents data, comprising:
permission means for permitting a connection from a transmitting device via a network;
list creation means for creating a list of said stored contents data;
reading means for reading said stored contents data, in response to a request from said transmitting device; and
supply means for supplying said list created by said list creation means and said contents data read by said reading means to said transmitting device via said network;
wherein said contents data is transmitted to an external terminal via said transmitting device.

14. A storing method of a storing device which stores contents data, said storing method comprising:
a permission step of permitting a connection from said transmitting device via a network;
a list creation step of creating a list of said stored contents data;
a step of supplying said created list to said transmitting device, in response to a request from said transmitting device;
a reading step of reading said stored contents data, in response to a request from said transmitting device; and
a supply step of supplying said contents data, which was read in processing in said reading step, to said transmitting device via said network;
wherein said contents data is transmitted to an external terminal via said transmitting device.

15. A recording medium including a storing program which stores contents data, said storing program being readable by a computer, wherein said program comprising:
a permission step of permitting a connection from said transmitting device via a network;
a list creation step of creating a list of said stored contents data;
a step of supplying said created list to said transmitting device, in response to a request from said transmitting device;
a reading step of reading said stored contents data, in response to a request from said transmitting device; and
a supply step of supplying said contents data read in processing of said reading step to said transmitting device via said network;
wherein said contents data is transmitted to an external terminal via said transmitting device.
